Europäisches Patentamt

European Patent Office

Office européen des brevets

(11) Veröffentlichungsnummer: **0 199 071**
**A2**

# (12) EUROPÄISCHE PATENTANMELDUNG

(21) Anmeldenummer: **86103505.3**

(22) Anmeldetag: **15.03.86**

(51) Int. Cl.⁴: **H04Q 11/04** , H04Q 3/68

(30) Priorität: **23.03.85 DE 3510566**

(43) Veröffentlichungstag der Anmeldung:
**29.10.86 Patentblatt 86/44**

(84) Benannte Vertragsstaaten:
**AT DE FR GB NL**

(71) Anmelder: **International Standard Electric Corporation**
**320 Park Avenue**
**New York New York 10022(US)**
Anmelder: **Standard Elektrik Lorenz Aktiengesellschaft**
**Lorenzstrasse 10**
**D-7000 Stuttgart 40(DE)**

(72) Erfinder: **Böttle, Dietrich**
**Buchenweg 14**
**D-7335 Salach(DE)**
Erfinder: **Dripke, Thomas**
**Lerchenstrasse 6**
**D-7015 Korntal(DE)**
Erfinder: **Ho Tan, Xuan**
**Schillerstrasse 42**
**D-7146 Tamm(DE)**

(74) Vertreter: **Villinger, Bernhard, Dipl.-Ing. et al**
**Standard Elektrik Lorenz AG Patent- und Lizenzwesen Postfach 300 929 Kurze Strasse 8**
**D-7000 Stuttgart 30(DE)**

(54) **Breitbandkoppelfeldbaustein und Breitbandkoppelfeld.**

(57) Es wird ein Breitbandkoppelfeldbaustein vorgestellt, mit dessen Hilfe es möglich ist, die beim Aufbau größerer Koppelfelder auftretenden Synchronisationsprobleme flexibel zu handhaben. Der erfindungsgemäße Koppelfeldbaustein weist am Eingang und am Ausgang der Signalwege abschaltbare Synchronisationseinrichtungen (1 und 2) auf. Außerdem wird der am Takteingang TE zugeführte Takt über Trennverstärker (3 und 4) wieder einem Taktausgang TA zugeführt. Dadurch ist es möglich, ein Koppelfeld so aufzubauen, daß es an keiner Stelle erforderlich ist, zwei Eingänge parallel zu schalten und an einen vorausgehenden Ausgang anzuschließen. Dies macht sich insbesondere bei der phasenrichtigen Verteilung eines schnellen Takts vorteilhaft bemerkbar.

SyncE  E1  E2  E3  E16  TE  SyncA

BE

RA  ES

3

T

1

4

TA

D1

K1601

R1

BI

K0101

A1

R2

D2

K0302

A2

**K**

R16

BI

D16  K0116  K0216  K1616

2

A16

FIG.1

## Breitbandkoppelfeldbaustein und Breitbandkoppelfeld

Die Erfindung betrifft einen Koppelfeldbaustein für Digitalsignale mit hoher Bitfolgefrequenz nach dem Oberbegriff des Anspruchs 1 und ein Koppelfeld, das aus einer Vielzahl solcher Koppelfeldbausteine aufgebaut ist.

Ein derartiger Koppelfeldbaustein wurde von den Herren C.Baack et al vom Heinrich-Hertz-Institut für Nachrichtentechnik in Berlin anläßlich der vom 7.-11. Mai 84 in Florenz abgehaltenen Koferenz ISS '84 in einem Vortrag mit dem Titel "Digital Integrated Services Broadband Network with HDTV-Capability" unter Punkt 3.2 "Broadband Matrix"veröffentlicht (schriftlich veröffentlich als Paper 1 der Session 32C dieser Tagung). Dieser Koppelfeldbaustein soll als integrierte Schaltung realisiert werden. Es wird angegeben, daß diese Schaltung mit einer Bitfolgefrequenz von 70 Mbit/s betrieben werden kann. Eine Vielzahl derartiger Koppelfeldbausteine wird dann zu einem größeren Koppelfeld zusammengeschaltet. Ein Beispiel für ein derartiges Koppelfeld ist in Fig. 7 der genannten Veröffentlichung skizziert. Gezeichnet sind dabei die möglichen Wege der Digitalsignale.

Die Durchschaltung der Koppelpunkte in diesem Koppelfeld erfolgt statisch. Es liegt also ein Raumvielfachkoppelfeld vor. Die Ausgangssignale müssen mit Hilfe eines Takts regeneriert werden. Für verschiedene Anwendungsfälle wird darüber hinaus gefordert, daß die Ausgangssignale aller Ausgänge zueinander bitsynchron sind. Hierzu enthalten die oben beschriebenen Bausteine jeweils am Eingang und am Ausgang Flip-Flops, durch die die Signale ständig bitsynchron regeneriert werden. Der hierzu erforderliche Takt muß dazu phasenrichtig an sämtliche Koppelfeldbausteine des gesamten Koppelfelds verteilt werden. Einen anderen Weg geht Siemens mit seinem Koppelfeldbaustein SH100 B856 (vorläufige Daten veröffentlicht 7/82). Dieser Koppelfeldbaustein weist keine Einrichtung zum bitsynchronen Regenerieren auf, es muß deshalb hierfür auch kein Takt im ganzen Koppelfeld verteilt werden. Zur erforderlichen bitsynchronen Regenerierung sind in diesem Fall separate Bauelemente erforderlich, die zumindest am Ausgang des Koppelfeldes angeordnet sein müssen. Laufzeitunterschiede innerhalb des Koppelfelds, sowohl innerhalb der einzelnen Koppelfeldbausteine, als auch zwischen den Koppelfeldbausteinen, sind sehr kritisch. Der nicht unerhebliche Energiebedarf für die bitsynchrone Regenerierung sowie das Erfordernis der Taktverteilung an alle Koppelfeldbausteine werden jedoch bei dieser Lösung vermieden.

Die Schwierigkeiten beider Lösungswege verschärfen sich mit zunehmender Bitfolgefrequenz der Digitalsignale und damit zunehmender Taktfrequenz. Hier schafft die Erfindung Abhilfe.

Erfindungsgemäß werden bei einem gattungsgemäßen Koppelfeldbaustein die Einrichtungen zum bitsynchronen Regenerieren (Synchronisationseinrichtung) abschaltbar ausgeführt. Eine weitere erfindungsgemäße Maßnahme, die dort, wo erforderlich, die Taktverteilung erleichtert, besteht darin, den Takt über Trennverstärker am Eingang und am Ausgang durch den Koppelfeldbaustein durchzuschalten. Derartige Koppelfeldbausteine werden nun erfindungsgemäß bevorzugt so eingesetzt, daß bei einem aus einer Vielzahl solcher Koppelfeldbausteine bestehenden Koppelfeld an jedem Ausgang eines Koppelfeldbausteins jeweils nur ein Eingang eines nachfolgenden Koppelfeldbausteins angeschlossen ist.

Vorteilhafte Ausgestaltungen der Erfindung sind den Ausführungsbeispielen zu entnehmen.

Im folgenden wird die Erfindung anhand von Ausführungsbeispielen unter Zuhilfenahme der beiliegenden Zeichnung weiter erläutert.

Figur 1 zeigt das Blockschaltbild eines erfindungsgemäßen Koppelfeldbausteins.

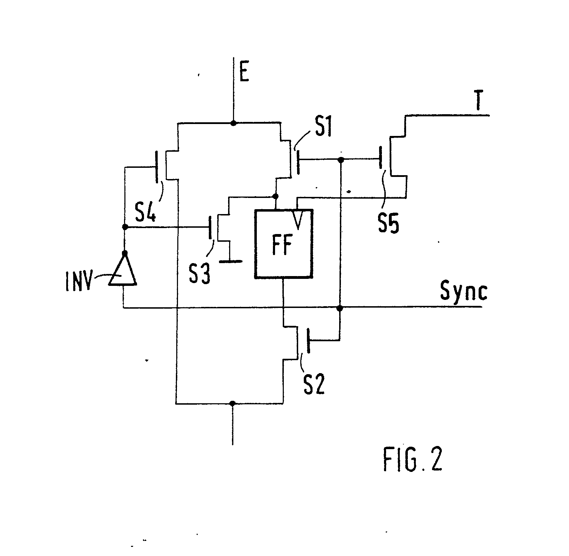

Figur 2 zeigt eine abschaltbare Synchronisationseinrichtung für einen erfindungsgemäßen Koppelfeldbaustein.

Figur 3 zeigt eine Abwandlung des Ausführungsbeispiels von Figur 1.

Figur 4 zeigt einen Ausschnitt aus einem erfindungsgemäß aufgebauten Koppelfeld.

Figur 5 zeigt einen Ausschnitt aus einem andersartigen erfindungsgemäßen Koppelfeld.

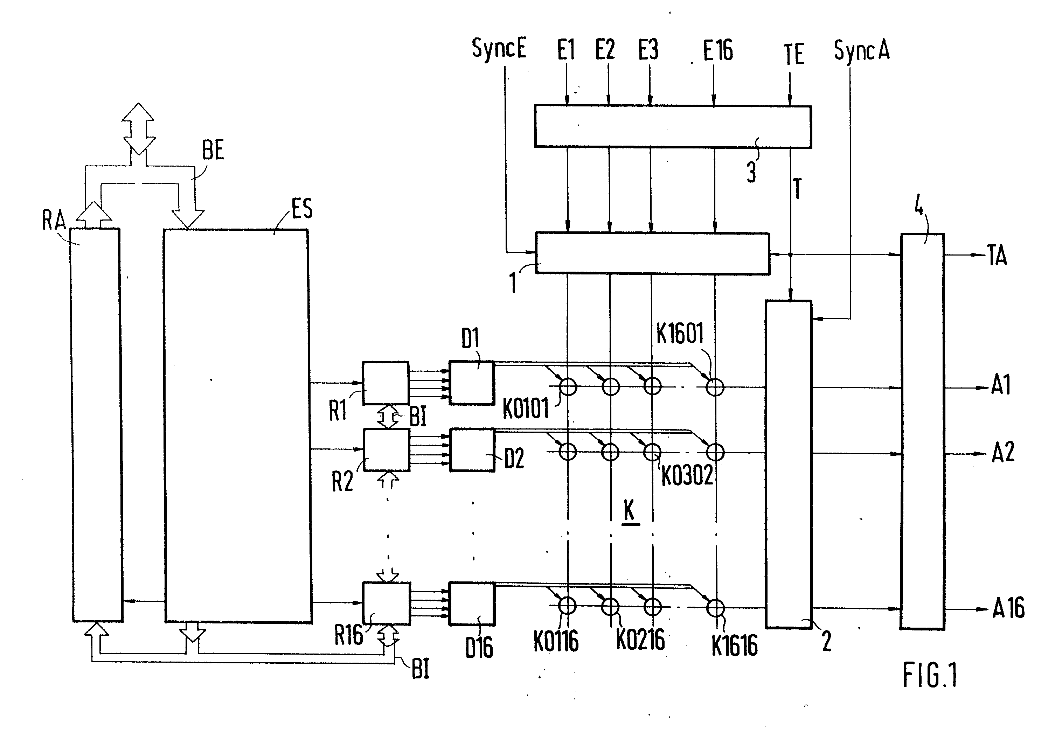

Anhand der Figur 1 wird nun zunächst ein Koppelfeldbaustein beschrieben, soweit er von der Erfindung noch nicht Gebrauch macht:

Der Kern des Koppelfeldbausteins ist eine Koppelfeldmatrix, die aus einer Vielzahl steuerbarer Koppelpunkte K0101... K1616 besteht. Jeder dieser Koppelpunkte ermöglicht eine Verbindung zwischen einem von 16 Signaleingängen E1 ... E16 und einem von 16 Signalausgängen A1 ... A16. Zwischen den Signaleingängen E1 ... E16 und der Koppelpunktmatrix ist ein Eingangstrennverstärker 3 und daran anschließend eine Eingangssynchronisatioseinrichtung 1 eingefügt. Sowohl der Eingangstrennverstärker 3 als auch die Eingangssynchronisationseinrichtung 1 enthalten jeweils für jeden von einem der Signaleingänge E1 ... E16 ausgehenden Signalweg eine eigene Verstärkereinheit bzw. eine eigene Synchronisationseinheit. Der Eingangssynchronisationseinrichtung 1 wird der Takt T zugeführt. Die Eingangssynchronisationseinrichtung 1 enthält im einfachsten Fall für jeden Signalweg ein mit dem Takt T getaktetes Daten-Flip-Flop . Anstelle eines jeden Daten-Flip-Flops kann aber auch eine Schaltungsanordnung gemäß der beim Deutschen Patentamt unter dem Aktenzeichen P 34 41 501.7 geführten Erfindung treten. Zwischen die Koppelpunktmatrix und die Signalausgänge A1 ... A16 sind entsprechend eine Ausgangssynchronisationseinrichtung 2 und ein Ausgangstrennverstärker 4 eingefügt.

Jedem Signalausgang A1 bis A16 ist ein Register R1 bis R16 und ein Decoder D1 bis D16 zugeordnet. In jedem Register R1 bis R16 ist die Nummer desjenigen Signaleingangs E1 bis E16 abgespeichert, der mit dem diesem Register R1 bis R16 zugeordneten Signalausgang A1 bis A16 verbunden ist. Im zugehörigen Decoder D1 bis D16 wird nun diese Nummer decodiert und einer der an den jeweiligen Decoder angeschlossenen Koppelpunkte wird durchgesteuert. Ist beispielsweise der Signaleingang E3 mit dem Signalausgang A2 verbunden, so enthält das Register R2 die Nummer 3 und der Decoder D2 schaltet den Koppelpunkt K0302 durch. Gleichzeitig werden die Koppelpunkte K0102, K0202, und K0402 bis K1602 gesperrt. Damit ist auch auf einfache Weise sichergestellt, daß zu jedem der Signalausgänge A1 bis A16 nur jeweils ein Signaleingang E1 bis E16 durchgeschaltet werden kann. Daß mehrere der Signalausgänge A1 bis A16 mit demselben Signaleingang verbunden werden können, braucht nicht verhindert werden. Die Durchschaltung eines Signaleingangs auf mehrere Signalausgänge ist beispielsweise erforderlich, wenn dieser Koppelnetzbaustein Teil einer Verteilungseinrichtung ist. Die Register R1 bis R16 erhalten ihren Inhalt über einen internen Bus BI von einer Empfangsschaltung ES. Der interne Bus BI führt sowohl Daten, als auch die erforderlichen Schreibund Lesesignale. Die Auswahl des jeweils angsprochenen Registers erfolgt direkt von der Empfangsschaltung ES aus. An den internen Bus BI ist auch ein Ausgangsregister RA angeschlossen, in das zu Kontrollzwecken der Inhalt eines der Register R1 bis R16 übertragen werden kann. Das Ausgangsregister RA ist hierzu, ebenfalls wie die Empfangsschaltung ES,mit einem nach außen führenden externen Bus BE verbunden. Über diesen externen Bus BE können Daten und Befehle an die Empfangsschaltung ES gegeben oder Daten vom Ausgangsregister RA abgefragt werden.

Dieser Koppelfeldbaustein weist nun erfindungsgemäß noch weitere Baugruppen und -elemente auf:

Der den Synchronisationseinrichtungen 1 und 2 zugeführte Takt T wird über eine weitere im Eingangstrennverstärker 3 enthaltene Verstärkereinheit von einem Takteingang TE abgenommen. Außerdem wird dieser Takt T über eine weitere im Ausgangstrennverstärker 4 enthaltene Verstärkereinheit an einen Taktausgang TA weitergegeben. Durch den Eingangstrennverstärker wird erreicht, daß die den Takt zuführende Leitung so wenig wie möglich belastet wird. Belastungen, insbesondere kapazitive Belastungen, haben einen starken Einfluß auf die Frequenz, mit der ein Signal noch sicher verarbeitet werden kann. Die Taktleitungen sind hiervon in wesentlich stärkerem Maß betroffen als die Signalleitung, da die auf den Signalleitungen übertragenen Signale mit Hilfe des Takts wieder regeneriert werden können, was für den Takt selbst nicht möglich ist. Dadurch, daß durch einen weiteren Trennverstärker am Ausgang der Takt am Taktausgang TA wieder zugänglich gemacht wird, kann die Belastung der an den Takteingang TE führenden Taktleitung weiter reduziert werden, weil der Takteingang eines weiteren Koppelfeldbausteins an den Taktausgang TA dieses Koppelfeldbausteins angeschlossen werden kann, so daß nicht zwei Takteingänge TE parallel geschaltet werden müssen. Durch geeignete Maßnahmen kann auch erreicht werden, daß die Verzögerung des Takts zwischen dem Takteingang TE und dem Taktausgang TA etwa gleich der mittleren Verzögerung eines Signals zwischen einem der Eingänge E1 bis E16 und einem der Ausgänge A1 bis A16 ist.

Es kann auch erreicht werden, daß die Verzögerung des Takts zwischen dem Takteingang TE und dem Taktausgang TA bei der vorgesehenen Betriebsfrequenz gleich einer Taktperiode ist. In diesem Fall kann nicht nur der Takteingang TE einer nachfolgenden Koppelfeldbaugruppe, sondern alternativ dazu auch der Takteingang TE einer parallel angeordneten Koppelfeldbaugruppe mit dem Taktausgang TA dieser Koppelfeldbaugruppe verbunden werden. Es ist damit möglich, die Taktleitung durch sämtliche Koppelfeldbaugruppen einer größeren Koppelfeldeinheit durchzuschleifen.

Unabhängig von der Maßnahme,den Takt zwischen Takteingang TE und Taktausgang TA durchzuschleifen, ist eine weitere Maßnahme, die darin besteht, die Eingangssynchronisationseinrichtung 1 und die Ausgangssynchronisationseinrichtung 2 abschaltbar zu machen. Hierzu wird der Eingangssynchronisationseinrichtung 1 von einem ersten Synchronisationssteuereingang SyncE und der Ausgangssynchronisationseinrichtung 2 von einem zweiten Synchronisationssteuereingang SyncA je ein Schaltsignal zugeführt, durch das die jeweilige Synchronisationseinrichtung ein-oder ausgeschaltet werden kann. Durch diese Abschaltmöglichkeit ist der Koppelfeldbaustein viel flexibler einsetzbar. Überall dort, wo eine Synchronisation erforderlich ist, kann diese durchgeführt werden, dort wo es nicht erforderlich ist, beispielsweise zwischen zwei räumlich eng benachbarten Koppelfeldbausteinen, kann die Synchronisation abgeschaltet und damit vor allem der Leistungsbedarf nicht unerheblich reduziert werden. Ein solcher Koppelfeldbaustein kann nun aber auch mit abgeschalteten Synchronisationseinrichtungen verwendet werden, um in einem Koppelfeld den Takt sternförmig an die einzelnen Koppelfeldbaugruppen und -bausteine zu verteilen, wobei das Verteilnetz für den Takt ebenfalls mit Koppelfeldbausteinen an den Verzweigungspunkten bestückt ist. Wie unten anhand der Figur 5 noch gezeigt wird,ist es auf diese Weise möglich, den Takt einfach und bei Bedarf mit vorgegebener Phase zu verteilen. Dies ist eine wichtige Voraussetzung beim Betrieb mit hohen Frequenzen.

Firug 2 zeigt ein einfaches Beispiel für eine abschaltbare Synchronisationsschaltung. Der Kern ist die eigentliche Synchronisationsvorrichtung, hier als Flip-Flop FF dargestellt. Das von einem der Signaleingänge E kommende Signal wird über einen Schalter S1 dem Dateneingang des Flip-Flops FF zugeführt. Auch in die Ausgangsleitung des Flip-Flops ist ein Schalter S2 eingefügt. Das Flip-Flop FF und die Schalter S1 und S2 werden durch eine Umwegleitung mit einem darin enthaltenen Schalter S4 überbrückt. Dem Takteingang des Flip-Flops FF wird der Takt über einen Schalter S5 zugeführt. Das vom zugehörigen Synchronisationssteuereingang Sync (SyncE oder SyncA) kommende Synchronisationssteuersignal wird den Schaltern S1, S2 und S5 direkt und dem Schalter S4 über einen Inverter INV zugeführt. Damit wird entweder der über das Flip-Flop FF führende Weg oder der daran vorbeiführende Weg durchgeschaltet. Dem Flip-Flop FF wird nur dann ein Takt zugeführt, wenn die Daten tatsächlich hier synchronisiert werden. Im anderen Fall, wenn die Daten bei geschlossenem Schalter S4 am Flip-Flop FF vorbeigeleitet werden, wird darüberhinaus der Dateneingang des Flip-Flops FF über einen weiteren Schalter S3 auf definiertes Potential (hier auf Masse) gesetzt.

Durch die Möglichkeit der Abschaltung der Synchronisationseinrichtung wird der Koppelfeldbaustein sehr viel flexibler einsetzbar. Damit kann zum Einen die Synchronisation dort, wo sie nicht unbedingt erforderlich ist, abgeschaltet werden, um Leistung zu sparen, sie kann auch dann abgeschaltet werden, wenn Signale verarbeitet werden sollen, bei denen die Synchronisation stören würde. Dies ist z.B. bei pulsphasenmodulierten Signalen, bei Signalen mit einer gegenüber der Taktfrequenz niedrigeren Bitfolgefrequenz oder bei einer Verteilung des Taktsignals selbst der Fall.

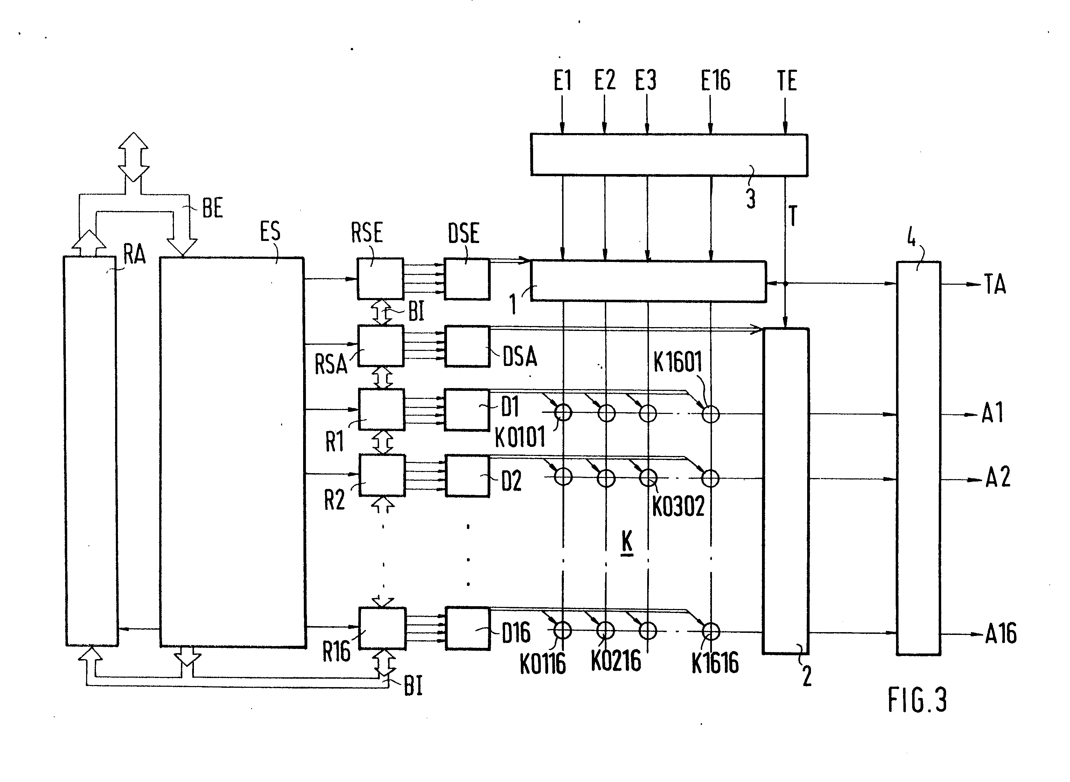

Figur 3 zeigt eine Abwandlung des Ausführungsbeispiels von Figur 1. Die Umschaltung der Synchronisationseinrichtungen wird hier nicht über getrennte Synchronisationssteuereingänge veranlaßt, sondern über den ohnehin vorhandenen externen Bus BE und die ebenfalls vorhandene Empfangsschaltung ES. Hierzu werden an die Empfangsschaltung ES und den internen Bus BI zwei weitere Register RSE und RSA für empfangsseitige bzw. sendeseitige Synchronisationssteuerung angeschlossen. Im einfachsten Fall werden nun die Eingangssynchronisationseinrichtung 1 und die Ausgangssynchronisationseinrichtung 2 direkt vom Register für empfangsseitige Synchronisationssteuerung RSE bzw. vom Register für sendeseitige Synchronisationsteuerung RSA angesteuert. Mit geringem zusätzlichem Aufwand kann hier aber, wie in Figur 3 gezeigt, über einen zusätzlichen Decoder für empfangsseitige Synchronisationssteuerung ESE und einen zusätzlichen Decoder für sendeseitige Synchronisationssteuerung DSA die Synchronisation eines jeden eingangsseitigen und eines jeden ausgangsseitigen Signalwegs beeinflußt werden. Dies kann beispielsweise wünschenswert sein, wenn die Signale an den Signaleingängen E1 bis E16 von unterschiedlich weit entfernten anderen Baugruppen kommen. Dies ist immer dann der Fall, wenn die Zahl der Eingänge nicht gleich der Zahl der Ausgänge ist, beispielsweise bei Koppelfeldbausteinen mit Erweiterungseingängen. Auch die Koppelfeldbausteine, die in dem eingangs erwähnten Artikel von C.Baack et al beschrieben werden, und die ebenfalls erwähnten Koppelfeldbausteine SA 100 B856 von Siemens weisen solche Erweiterungseingänge auf.

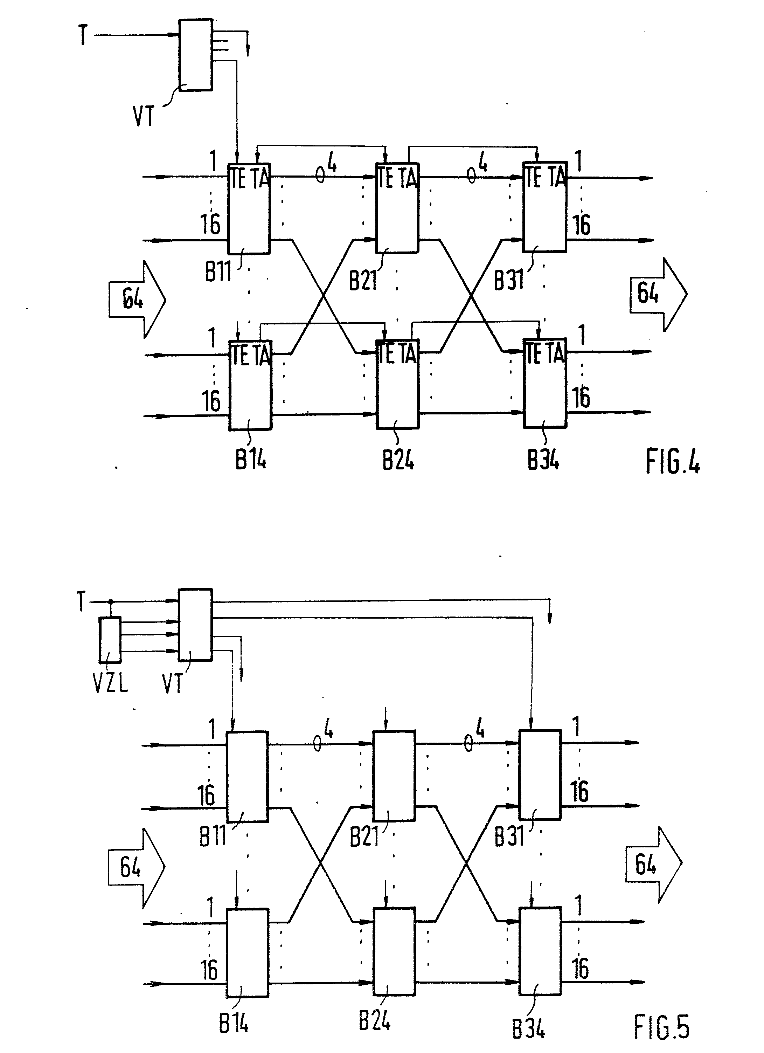

Figur 4 zeigt eine erfindungsgemäß aufgebaute Koppelfeldbaugruppe aus mehreren erfindungsgemäßen Koppelfeldbausteinen. Die gezeigte Koppelfeldbaugruppe ist dreistufig aufgebaut. Jede Stufe besteht aus vier Koppelfeldbausteinen B11 bis B14, B21 bis B24 und B31 bis B34. Die Koppelfeldbausteine B11 bis B34 weisen einen Aufbau wie die anhand der Figur 1 oder 3 beschriebenen Koppelfeldbausteine auf. Von den je 16 Signalausgängen eines Koppelfeldbausteins B11 bis B24 der beiden ersten Stufen gehen jeweils vier Verbindungen zu jedem Koppelfeldbaustein B21 bis B34 der nachfolgenden Stufe. Ein zusätzlich vorhandener gleichartig aufgebauter Koppelfeldbaustein wird als Taktverteiler VT verwendet. Dieser Taktverteiler erhält an einem seiner Signaleingänge den Takt T zugeführt. Sein Takteingang bleibt unbeschaltet. Die Synchronisationseinrichtungen sind abgeschaltet. Der Takt T wird an vier Signalausgänge durchgeschaltet. Die vier Koppelfeldbausteine B11 bis B14 der ersten Stufe sind mit ihren Takteingängen mit je einem dieser vier Signalausgänge des Taktverteilers VT verbunden. Die Taktausgänge TA der Koppelfeldbausteine B11 bis B14 der ersten Stufe sind mit je einem Takteingang TE eines Koppelfeldbausteins B21 bis B24 der zweiten Stufe und deren Taktausgänge TA wiederum mit einem Takteingang TE eines Koppelfeldbausteins B31 bis B34 der letzten Stufe verbunden. Durch diese Art der Taktverteilung wird, wie oben schon erwähnt, erreicht, daß die Taktleitungen nur sehr gering belastet werden und daß deshalb auch bei hohen Taktfrequenzen jedem Koppelfeldbaustein der Takt korrekt zugeführt wird. Da in diesem Beispiel die Koppelfeldbausteine der einzelnen Stufen sehr dicht aufeinanderfolgen, kann es ausreichen, nur die Eingangssynchronisationseinrichtung in der ersten Stufe und die Ausgangssynchronisationseinrichtung der letzten Stufe wirken zu lassen. Die mittlere Stufe müßte in diesem Fall nicht an den Takt angeschlossen werden.

Figur 5 zeigt eine Abwandlung der Koppelfeldbaugruppen von Figur 4. Hier werden die Takteingänge TE aller Koppelfeldbausteine B11 bis B34 dieser Koppelfeldbaugruppe mit Signalausgängen des Taktverteilers VT verbunden. Zusätzlich ist hier noch eine Verzögerungsleitung VZL vorhanden, die den Takt stufenweise bis etwa eine Taktperiode oder Vielfache davon verzögert. Die Abgriffe dieser Verzögerungsleitung sind mit weiteren Signaleingängen des Taktverteilers VT verbunden. Auf diese Weise ist es möglich, jedem einzelnen der Koppelfeldbausteine B11 bis B34 einen Takt ganz bestimmter Phase zuzuführen. Damit können auch Laufzeitschwankungen innerhalb der Koppelfeldbaugruppe berücksichtigt werden.

So wie aus einzelnen Koppelfeldbausteinen ganze Koppelfeldbaugruppen aufgebaut werden können, so kann auch ein ganzes Koppelfeld aus mehreren, möglichweise verschiedenartigen Koppelfeldbaugruppen aufgebaut werden. Es ist dabei ohne weiteres möglich, das ganze Koppelfeld so aufzubauen, daß jeder Koppelfeldbaustein, der einen Takt mit einer bestimmten Phase benötigt, diesen auch erhält. Dabei muß natürlich darauf geachtet werden, daß die durch die Auslegung des Taktverteilungsnetzes erreichbare hohe Taktfrequenz in den Signalwegen auch verarbeitet werden kann. Beim Aufbau des Koppelfelds müssen deshalb solche Strukturen ausscheiden, bei denen an einen Signalausgang gleichzeitig zwei Signaleingänge nachfolgender Koppelfeldbausteine angeschlossen werden müssen.

**Ansprüche**

1. Koppelfeldbaustein für Digitalsignale mit hoher Bitfolgefrequenz mit Einrichtungen zum bitsynchronen Regenerieren der Digitalsignale und mit einem Steuerteil zum Ansteuern der Koppelpunkte, **dadurch gekennzeichnet**, daß die Einrichtungen (1, 2) zum bitsynchronen Regenerieren abschaltbar sind.

2. Koppelfeldbaustein nach Anspruch 1 oder nach dem Oberbegriff von Anspruch 1, **dadurch gekennzeichnet**, daß die Einrichtungen (1, 2) zum bitsynchronen Regenerieren über einen ersten Trennverstärker (3) mit einem Takteingang und über einen zweiten Trennverstärker (4) mit einem Taktausgang des Koppelfeldbausteins verbunden sind.

3. Koppelfeld, bestehend aus einer Vielzahl von Koppelfeldbausteinen nach Anspruch 1 oder 2, **dadurch gekennzeichnet**, daß an jedem Ausgang eines Koppelfeldbausteins jeweils nur ein Eingang eines nachfolgenden Koppelfeldbausteins angeschlossen ist.

SyncA

TE T SyncE E1 E2 E3 ... E16

TA A1 A2 A16

SyncE

K1601 K0302 K1616

K0101 K0216 K1616

K0116 K0216 K1616

D1 D2 D16

K

R1 R2 R16

BI BI

ES

BE

RA

FIG.1

FIG.2

D. Böttle 9-
21.3.85

FIG.3

FIG.4

FIG.5

D. Böhle 9-
21. 3. 85